# EUROPÄISCHE PATENTANMELDUNG

(11) **EP 2 930 876 A1**
(43) Veröffentlichungstag der Anmeldung: **14.10.2015**
(21) Anmeldenummer: 15154298.2
(22) Anmeldetag: 09.02.2015
(51) Int. Cl.: H04L 9/08

(54) **Schlüsselerzeugungsvorrichtung und Verfahren zum Erzeugen eines Schlüssels**

(30) Priorität: 10.04.2014 DE 102014206943
(71) Anmelder: Siemens Aktiengesellschaft, 80333 München (DE)
(72) Erfinder: Falk, Rainer, 85586 Poing (DE); Fischer, Kai, 85598 Baldham (DE); Passarelli, Anne, 80809 München (DE)

(57) **Zusammenfassung**

Es wird eine Schlüsselerzeugungsvorrichtung (10) zum Erzeugen eines Schlüssels (K) unter Verwendung einer Physical Unclonable Function (20), PUF, vorgeschlagen. Die Schlüsselerzeugungsvorrichtung (10) weist eine Speichereinrichtung (1) zur Speicherung einer Mehrzahl von Hilfsdatensätzen (5, 6, 7), wobei ein jeder der Hilfsdatensätze (5, 6, 7) Hilfsdaten und Zusatzinformationen aufweist, eine Auswahleinrichtung (2) zur Auswahl eines Hilfsdatensatzes (5, 6, 7) basierend auf den Zusatzinformationen, und eine Erzeugungseinrichtung (3) zur Erzeugung des Schlüssels (K) basierend auf den Hilfsdaten des ausgewählten Hilfsdatensatzes (5, 6, 7) und unter Verwendung der PUF (20) auf.

Um aus einer PUF einen stabilen Schlüssel zu bestimmen, wird häufig eine Fehlerkorrektur benötigt, um aus verrauschten, leicht unterschiedlichen PUF-Responses einen stabilen Wert zu ermitteln. Eine solche Fehlerkorrektur kann Hilfsdaten verwenden. Gemäß der vorgeschlagenen Schlüsselerzeugungsvorrichtung steht eine Mehrzahl von Hilfsdatensätzen zur Verfügung, so dass insbesondere auch unter sich verändernden Umgebungsbedingungen, die Einfluss auf die PUF und somit die PUF-Responses haben, zuverlässig ein stabiler Schlüssel ermittelt werden kann.

Des Weiteren wird ein Verfahren zum Erzeugen eines Schlüssels vorgeschlagen.

## Beschreibung

Die vorliegende Erfindung betrifft eine Schlüsselerzeugungsvorrichtung zum Erzeugen eines Schlüssels unter Verwendung einer Physical Unclonable Function (PUF). Des Weiteren betrifft die vorliegende Erfindung ein Verfahren zum Erzeugen eines Schlüssels unter Verwendung einer PUF.

Für viele Anwendungen ist ein kryptographischer Schlüssel erforderlich. Dieser kann beispielsweise mittels eines Schlüsselextraktors, wie einem Fuzzy Key Extractor, unter Verwendung einer Physical Unclonable Function (PUF) erzeugt werden.

Es sind Physical Unclonable Functions auf einem Halbleiter-Schaltkreis bekannt. Es existieren unterschiedliche Arten von PUFs, wie beispielsweise https://www.cosic.esat.kuleuven.be/ecrypt/courses/albena11/sl ides/ingrid_verbauwhede_pufs.pdf entnommen werden kann. Hierzu zählen beispielsweise SRAM-PUFs, Ring-Oszillator-PUFs und Arbiter-PUFs. Unter anderem letztere stellen abhängig von einem Challenge-Wert einen Response-Wert bereit.

Ein Fuzzy Key Extractor, wie er oben genannt ist, benötigt Hilfsdaten, auch Helper Data genannt, die bei der Generierung eines Schlüssels erzeugt werden müssen. Diese müssen außerdem abgespeichert werden, wozu ein nichtflüchtiger Speicher erforderlich ist. Einen Überblick über PUF-basierte Schlüsselerzeugung gibt z.B. http://www.cosic.esat.kuleuven.be/publications/article-2323.pdf (M. Yu, D. M'Raihi, S. Devadas, and I. Verbauwhede, "Security and Reliability Properties of Syndrome Coding Techniques Used in PUF Key Generation" in GOMACTech conference 38, GomacTech, Seiten 1 - 4, 2013) und http://www.nxp.com/documents/other/75017366.pdf (NXP: PUF - Physical Unclonable Functions, Protecting next-generation Smart Card ICs with SRAM-based PUFs).

Es ist bekannt, dass die PUF-Eigenschaften unter anderem von der Versorgungsspannung und der Umgebungstemperatur, oder auch anderen Umgebungsbedingungen, abhängen. Unter anderem aus diesem Grund wird eine Fehlerkorrektur benötigt, um aus verrauschten, leicht unterschiedlichen PUF-Responses - bei einem Challenge-Response-Verfahren - einen stabilen Wert zu ermitteln.

Ein Ansatz besteht darin, bei der Auswahl des Fehlerkorrekturverfahrens des PUF-Schlüsselextraktors eine große Anzahl von Bitfehlern zuzulassen. Dieser Ansatz führt jedoch zu einem aufwändigen Fehlerkorrekturverfahren. Er hat außerdem Grenzen bei PUFs, die über einen weiten Schwankungsbereich (z.B. Temperaturen von -40 °C bis 90 °C) ein deutlich schwankendes Verhalten aufweisen, also nicht nur eine begrenzte Zahl von Bitfehlern.

Aus WO 2013/083415 A2 ist ein PUF-Schlüsselextraktor bekannt, der bei der Fehlerkorrektur eine Reliability-Information ermittelt.

Aus US 8,312,289 B2 ist bekannt, die Hilfsdaten im laufenden Betrieb bei zunehmenden Fehlern zu aktualisieren bzw. neu zu bestimmen.

Aus http://rijndael.ece.vt.edu/puf/paper/fpl2009.pdf (Abhranil Maiti, Patrick Schaumont: IMPROVING THE QUALITY OF A PHYSICAL UNCLONABLE FUNCTION USING CONFIGURABLE RING OSCILLATORS, Seiten 703 - 707, 19th International Conference on Field Programmable Logic and Applications, FPL 2009, August 31 - September 2, 2009, Prague, Czech Republic) ist bekannt, eine PUF so robust zu realisieren, dass für eine Schlüsselextraktion nur eine geringe Anzahl an Bitfehlern korrigiert werden muss.

Vor diesem Hintergrund besteht eine Aufgabe der vorliegenden Erfindung darin, unter verschiedenen Bedingungen auf einfache Weise einen zuverlässigen Schlüssel unter Verwendung einer Physical Unclonable Function bereitzustellen.

Demgemäß wird eine Schlüsselerzeugungsvorrichtung zum Erzeugen eines Schlüssels unter Verwendung einer Physical Unclonable Function, PUF, vorgeschlagen. Die Schlüsselerzeugungsvorrichtung weist eine Speichereinrichtung zur Speicherung einer Mehrzahl von Hilfsdatensätzen, wobei ein jeder der Hilfsdatensätze Hilfsdaten und Zusatzinformationen aufweist, eine Auswahleinrichtung zur Auswahl eines Hilfsdatensatzes basierend auf den Zusatzinformationen, und eine Erzeugungseinrichtung zur Erzeugung des Schlüssels basierend auf den Hilfsdaten des ausgewählten Hilfsdatensatzes und unter Verwendung der PUF auf.

Die jeweilige Einrichtung, zum Beispiel Auswahleinrichtung oder Erzeugungseinrichtung, kann hardwaretechnisch und/oder auch softwaretechnisch implementiert sein. Bei einer hardwaretechnischen Implementierung kann die jeweilige Einrichtung als Vorrichtung oder als Teil einer Vorrichtung, zum Beispiel als Computer oder als Mikroprozessor, ausgebildet sein. Bei einer softwaretechnischen Implementierung kann die jeweilige Einrichtung als Computerprogrammprodukt, als eine Funktion, als eine Routine, als Teil eines Programmcodes oder als ausführbares Objekt ausgebildet sein.

Gemäß der vorgeschlagenen Schlüsselerzeugungseinrichtung sind in der Speichereinrichtung mehrere Sätze von Hilfsdaten bzw. Helper Data für die Erzeugungseinrichtung gespeichert. Die Erzeugungseinrichtung kann ein PUF-Schlüsselextraktor sein, der unter Verwendung der PUF und der Hilfsdaten einen kryptographischen Schlüssel erzeugt.

Basierend auf den Zusatzinformationen kann ein Hilfsdatensatz, und somit die darin enthaltenen Hilfsdaten, durch die Auswahleinrichtung ausgewählt werden. Die Art der Auswahl eines Hilfsdatensatzes kann von der Art der Zusatzinformation abhängen. Beispielsweise kann die Auswahleinrichtung ermitteln, ob ein bestimmtes Kriterium erfüllt werden muss und welche Zusatzinformationen dieses Kriterium erfüllen, oder ob die Zusatzinformationen einen bestimmten Wert enthalten.

Eine Erzeugung und Speicherung von mehreren Sätzen von Hilfsdaten kann beispielsweise während der Fertigung erfolgen. Wenn es sich bei den Zusatzinformationen um Umgebungsbedingungen handelt, können in einer Vorrichtung Umgebungsbedingungen simuliert werden. Beispielsweise kann ein Gerät, das die PUF enthält, in einer Temperaturkammer unterschiedlichen Temperaturen ausgesetzt werden. In diesem Fall können mehrere temperatur-spezifische Hilfsdatensätze angelegt werden.

Mit Hilfe der vorgeschlagenen Schlüsselerzeugungsvorrichtung kann beispielsweise für einen großen Bereich von Umgebungsbedingungen gewährleistet werden, dass eine PUF-basierte Schlüsselextraktion bzw. -erzeugung zuverlässig einen bestimmten kryptographischen Schlüssel erzeugen kann. Dies ist der Fall, da abhängig von den Zusatzinformationen unterschiedliche Hilfsdaten ausgewählt werden können. Auf diese Weise kann die Erzeugung des Schlüssels unter Berücksichtigung verschiedener Kriterien, wie unter anderem den Umgebungsbedingungen, erfolgen, die durch die Auswahl eines der Hilfsdatensätze basierend auf den Zusatzinformationen einfließen.

Gemäß einer Ausführungsform weist die Schlüsselerzeugungseinrichtung eine Ermittlungseinrichtung zur Ermittlung von zumindest einem aktuellen Wert für zumindest eine Umgebungsbedingung der PUF auf, wobei die Speichereinrichtung dazu eingerichtet ist, für jeden Hilfsdatensatz zumindest einen Referenzwert für die zumindest eine Umgebungsbedingung als Zusatzinformationen zu speichern, und wobei die Auswahleinrichtung dazu eingerichtet ist, den Hilfsdatensatz basierend auf dem zumindest einen aktuellen Wert und dem zumindest einen Referenzwert auszuwählen.

Da sich die Eigenschaften der PUF mit verändernden Umgebungsbedingungen ebenfalls verändern, können sich die Zusatzinformationen insbesondere auf Umgebungsbedingungen beziehen. Aktuelle Werte einer Umgebungsbedingung können durch die Ermittlungseinrichtung ermittelt und der Auswahleinrichtung zur Verfügung gestellt werden. Die Auswahleinrichtung kann dann entscheiden, welche der gespeicherten Zusatzinformationen, die jeweils zumindest einen Referenzwert enthalten, zu dem aktuell bestimmten Wert korrespondieren und basierend darauf die Hilfsdaten bzw. den Hilfsdatensatz auswählen, der zur Erzeugung des Schlüssels verwendet werden soll.

Das bedeutet also, dass für die Schlüsselextraktion abhängig von Umgebungsbedingungen, insbesondere abhängig von der Umgebungstemperatur, Hilfsdaten ausgewählt werden. Diese Auswahl kann explizit unter Verwendung einer entsprechenden Ermittlungseinrichtung erfolgen. Das heißt, beispielsweise abhängig von der aktuell gemessenen Temperatur wird ein dieser Temperatur zugeordneter Hilfsdatensatz ausgewählt.

Gemäß einer weiteren Ausführungsform ist die Speichereinrichtung dazu eingerichtet, für jeden Hilfsdatensatz einen Referenzwertebereich für die zumindest eine Umgebungsbedingung als Zusatzinformation zu speichern.

Gemäß dieser Ausführungsform kann jeder Hilfsdatensatz einen Referenzwertebereich aufweisen. Das bedeutet, dass die Hilfsdaten eines Hilfsdatensatzes nicht nur für einen einzelnen aktuellen Wert, sondern für mehrere aktuelle Werte der Umgebungsbedingung geeignet sind.

Gemäß einer weiteren Ausführungsform ist die Auswahleinrichtung dazu eingerichtet, einen Hilfsdatensatz auszuwählen, dessen Referenzwertebereich zu dem zumindest einen aktuellen Wert korrespondiert.

Bevorzugt enthält der Referenzwertebereich genau den zumindest einen aktuellen Wert. Falls keiner der Referenzwertebereiche den aktuellen Wert enthält, kann derjenige Hilfsdatensatz ausgewählt werden, dessen Referenzwertebereich am nächsten an dem aktuellen Wert ist.

Gemäß einer weiteren Ausführungsform ist die Auswahleinrichtung dazu eingerichtet, wenn sich die gespeicherten Referenzwertebereiche der Mehrzahl von Hilfsdatensätzen überschneiden, denjenigen Hilfsdatensatz auszuwählen, dessen Referenzwertebereich den zumindest einen aktuellen Wert als Mittelwert aufweist.

Bei einer Überschneidung der gespeicherten Referenzwertebereiche kann die Auswahleinrichtung ermitteln, bei welchem Referenzwertebereich der aktuelle Wert am besten in der Mitte liegt, also den Median darstellt, oder welcher Referenzwertebereich den aktuellen Wert als Durchschnittswert aufweist.

Gemäß einer weiteren Ausführungsform ist die Auswahleinrichtung dazu eingerichtet, ein Fehlersignal auszugeben, wenn keine der Zusatzinformationen den zumindest einen aktuellen Wert aufweist.

Wenn die Auswahleinrichtung den aktuellen Wert in keinem der gespeicherten Hilfsdatensätze finden kann, kann die Auswahleinrichtung ein Fehlersignal ausgeben, statt einen der Hilfsdatensätze auszuwählen. In Antwort auf das Fehlersignal können beispielsweise neue Hilfsdaten erzeugt und mit dem aktuellen Wert als Zustandsinformation als neuer Hilfsdatensatz abgespeichert werden. Dies kann bevorzugt dann erfolgen, wenn der Schlüssel wieder rekonstruiert werden kann, d.h. die Umgebungsbedingungen die Auswahl von Hilfsdatensätzen ermöglichen. Alternativ kann die Auswahleinrichtung die bereits vorhandenen Hilfsdatensätze durchprobieren und einen Hilfsdatensatz auswählen, der am besten passt. Dies kann abhängig von auftretenden Fehlern bestimmt werden.

Nach Erzeugung des Schlüssels, wenn also der Schlüssel vorliegt, kann bei einer Änderung der Umgebungsbedingungen in einen Wertebereich, für den noch kein Hilfsdatensatz vorliegt, ein neuer Hilfsdatensatz für den aktuellen Wert der Umgebungsbedingung generiert und mit einer davon abhängigen Zusatzinformation gespeichert werden.

Gemäß einer weiteren Ausführungsform weist die Ermittlungseinrichtung einen Sensor zum Erfassen des zumindest einen aktuellen Werts für zumindest eine Umgebungsbedingung der PUF auf.

Der Sensor kann irgendeine Art von Sensor sein, der dazu geeignet ist, die entsprechende Umgebungsbedingung zu erfassen. Es können auch mehrere Sensoren vorgesehen sein. In diesem Fall können auch mehrere Umgebungsbedingungen in die Zusatzinformationen bzw. die Auswahl der Hilfsdatensätze einfließen.

Gemäß einer weiteren Ausführungsform ist die zumindest eine Umgebungsbedingung eine Umgebungstemperatur, Luftfeuchtigkeit, Luftdruck, Vibration, Beschleunigung und/oder Versorgungsspannung der PUF.

Die PUF kann durch verschiedene Umgebungsbedingungen beeinflusst werden. Jede dieser Umgebungsbedingungen kann bei der Auswahl eines Hilfsdatensatzes als Zusatzinformation verwendet werden. Je nach Art der verwendeten Ermittlungseinrichtung können die gespeicherten Zusatzinformationen bezüglich ihrer Art angepasst werden.

Es können auch mehrere Umgebungsbedingungen als Zusatzinformation verwendet werden. In diesem Fall können die verschiedenen Umgebungsbedingungen priorisiert werden. Beispielsweise kann die Temperatur vor der Luftfeuchtigkeit priorisiert werden. Alternativ könnte auch ein Wert der Temperatur bestimmt werden, und basierend auf dieser Bestimmung, beispielsweise wenn die Temperatur kleiner als ein vorbestimmter Wert ist, die Luftfeuchtigkeit als ungeeignet bestimmt und als zweiter Wert eine andere Umgebungsbedingung verwendet werden.

Gemäß einer weiteren Ausführungsform ist die Erzeugungseinrichtung dazu eingerichtet, einen neuen Hilfsdatensatz für die Mehrzahl der Hilfsdatensätze zu erzeugen und an die Speichereinrichtung zur Speicherung zu übergeben.

Auf diese Weise können im laufenden Betrieb Hilfsdaten, beispielsweise für noch nicht abgedeckte Bereiche von Umgebungsbedingungen, ermittelt und abgespeichert werden. Dies ist insbesondere bei Temperaturschwankungen einfach zu realisieren, da diese im Allgemeinen stetig erfolgen und so die Hilfsdatensätze für Temperaturen nach oben oder nach unten einfach hinzugefügt werden können. Wenn also bei Vorliegen eines Temperaturbereichs, für den Hilfsdaten verfügbar sind, der Schlüssel extrahiert bzw. erzeugt werden kann, so kann bei einer Änderung der Temperatur in einen nicht abgedeckten Bereich ein neuer Satz von Hilfsdaten für diesen Temperaturbereich angelegt werden.

Gemäß einer weiteren Ausführungsform ist die Speichereinrichtung dazu eingerichtet, für jeden Hilfsdatensatz ein Gütekriterium als Zusatzinformation zu speichern. Dabei ist die Auswahleinrichtung dazu eingerichtet, den Hilfsdatensatz basierend auf dem Gütekriterium auszuwählen.

Alternativ zu der expliziten Auswahl basierend auf Umgebungsbedingungen kann die Auswahl implizit erfolgen. Da im Allgemeinen eine Information über die bei einer Schlüsselextraktion korrigierten Bitfehler oder eine vergleichbare Verlässlichkeitsinformation ermittelt wird, kann abhängig von dieser Information, d.h. dem Gütekriterium, ein Hilfsdatensatz ausgewählt werden. Beispielsweise kann das Gütekriterium Informationen über den Grad der Verlässlichkeit enthalten. So kann beispielsweise der Hilfsdatensatz mit der höchsten Verlässlichkeit, d.h. dem Gütekriterium, welches den höchsten Grad an Verlässlichkeit angibt, ausgewählt werden.

Die Hilfsdatensätze können auch in dieser Ausführungsform explizite Informationen zu Umgebungsbedingungen, für die sie vorgesehen sind, aufweisen. So kann beispielsweise bei Auswahl eines Hilfsdatensatzes basierend auf einer aktuellen Temperatur zusätzlich auch die Verlässlichkeit der bezüglich der Temperatur angrenzenden Hilfsdatensätze geprüft werden. Sofern die Verlässlichkeit eines anderen Hilfsdatensatzes höher ist als die des Ausgewählten, kann die Auswahl entsprechend korrigiert werden.

Gemäß einer weiteren Ausführungsform ist die Erzeugungseinrichtung dazu eingerichtet, für einen jeden der Hilfsdatensätze ein Gütekriterium zu ermitteln.

Das Gütekriterium kann beispielsweise anhand von auftretenden Bitfehlern bei der Erzeugung eines Schlüssels ermittelt und als Zusatzinformation gespeichert werden.

Gemäß einer weiteren Ausführungsform ist die Speichereinrichtung dazu eingerichtet, für den zuletzt ausgewählten Hilfsdatensatz eine Referenzinformation zu speichern. Dabei ist die Auswahleinrichtung dazu eingerichtet, einen Hilfsdatensatz basierend auf der Referenzinformation und den Zusatzinformationen auszuwählen.

Gemäß dieser Ausführungsform kann eine Referenzinformation des zuletzt, insbesondere erfolgreich, verwendeten Hilfsdatensatzes verwendet werden. Bei einer erneuten Schlüsselextraktion bzw. -erzeugung können probehalber die bezüglich der Umgebungsbedingungen, beispielsweise des Temperaturbereichs, angrenzenden Hilfsdatensätze verwendet werden.

Bei der Verwendung eines Gütekriteriums kann bestimmt werden, ob das Gütekriterium des angrenzenden Hilfsdatensatzes besser ist als dasjenige des aktuell Ausgewählten. Wenn dies der Fall ist, kann der angrenzende Hilfsdatensatz ausgewählt und dessen Referenzinformation als neue Referenzinformation gespeichert werden.

Dies ist insbesondere hilfreich, wenn davon auszugehen ist, dass sich die Umgebungsbedingungen nicht schnell stark ändern. In solchen Fällen kann häufig der zuletzt verwendete Hilfsdatensatz auch bei einer neuen Schlüsselerzeugung noch für eine zuverlässige Schlüsselerzeugung verwendet werden.

Gemäß einer weiteren Ausführungsform ist die Erzeugungseinrichtung dazu eingerichtet, ein Challenge-Response-Verfahren mittels der PUF durchzuführen.

Bei einem Challenge-Response-Verfahren mittels der PUF wird eine Challenge an die PUF gesendet. Diese beantwortet die Challenge mit einer Response. Die Response wird dann wiederum von der Erzeugungseinrichtung zur Erzeugung des Schlüssels verwendet.

Gemäß einer weiteren Ausführungsform ist die Erzeugungseinrichtung ein Fuzzy-Key-Extractor.

Ein Fuzzy-Key-Extractor, oder auch kurz Fuzzy-Extractor, ist ein Schlüsselextraktor bzw. Schlüsselerzeuger, der einen kryptographischen Schlüssel aus fehlerbehafteten Eingangsdaten, wie z.B. aus biometrischen Daten oder aus Daten einer physikalisch nicht-klonbaren Funktion, erzeugt.

Gemäß einem weiteren Aspekt wird ein Verfahren zum Erzeugen eines Schlüssels unter Verwendung einer Physical Unclonable Function, PUF, vorgeschlagen. Das Verfahren weist die folgenden Schritte auf: Speichern einer Mehrzahl von Hilfsdatensätzen, wobei ein jeder der Hilfsdatensätze Hilfsdaten und Zusatzinformationen aufweist, Auswählen eines Hilfsdatensatzes basierend auf den Zusatzinformationen, und Erzeugen des Schlüssels basierend auf den Hilfsdaten des ausgewählten Hilfsdatensatzes und unter Verwendung der PUF.

Weiterhin wird ein Computerprogrammprodukt vorgeschlagen, welches auf einer programmgesteuerten Einrichtung die Durchführung des wie oben erläuterten Verfahrens veranlasst. Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein schematisches Blockdiagramm eines ersten Ausführungsbeispiels einer Schlüsselerzeugungsvorrichtung;
Fig. 2 zeigt ein schematisches Blockdiagramm eines zweiten Ausführungsbeispiels einer Schlüsselerzeugungseinrichtung; und
Fig. 3 zeigt ein schematisches Ablaufdiagramm eines Verfahrens zum Erzeugen eines Schlüssels.

In den Figuren sind gleiche oder funktionsgleiche Elemente mit denselben Bezugszeichen versehen worden, sofern nichts anderes angegeben ist.

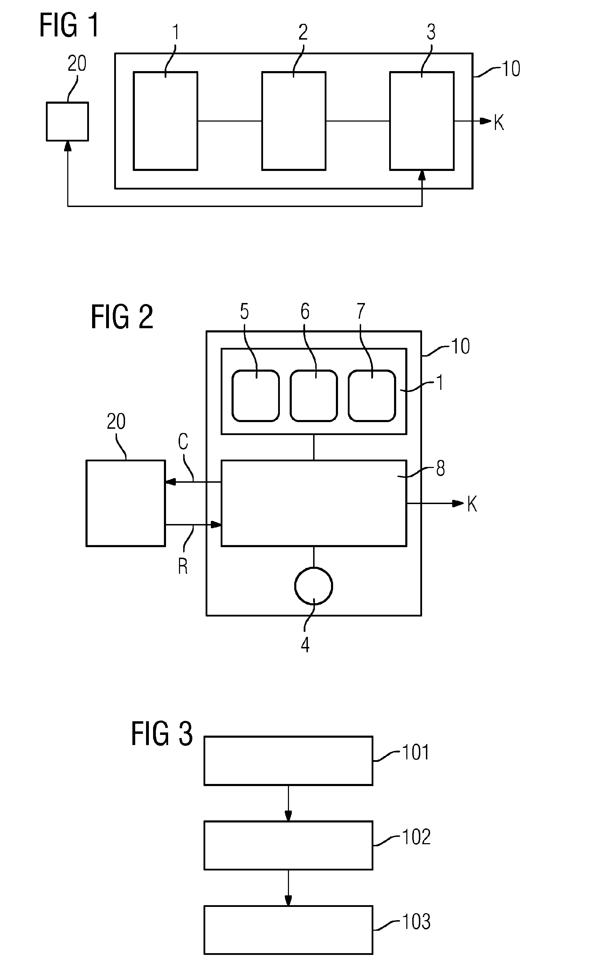

Fig. 1 zeigt eine Schlüsselerzeugungsvorrichtung 10 zum Erzeugen eines Schlüssels K unter Verwendung einer Physical Unclonable Function (PUF) 20.

Eine Mehrzahl von Hilfsdatensätzen 5, 6, 7 (gezeigt in Fig. 2) sind in einer Speichereinrichtung 1 gespeichert. Diese Hilfsdatensätze 5, 6, 7 weisen Hilfsdaten und Zusatzinformationen auf. Die Zusatzinformationen können beispielsweise Werte oder Wertebereiche von Umgebungsbedingungen wie Temperaturen sein.

Eine Auswahleinrichtung 2 wählt einen der Hilfsdatensätze 5, 6, 7 basierend auf den Zusatzinformationen aus. Basierend auf den Hilfsdaten des ausgewählten Hilfsdatensatzes 5, 6, 7 kann dann eine Erzeugungseinrichtung 3 den Schlüssels K unter Verwendung der PUF 20 erzeugen.

Ein weiteres Beispiel einer Schlüsselerzeugungsvorrichtung 10 ist in Fig. 2 gezeigt.

In dieser Ausführungsform ermittelt eine Ermittlungseinrichtung 4 aktuelle Umgebungsbedingungen der PUF und gibt einen aktuellen Wert an eine kombinierte Auswahl- und Erzeugungsvorrichtung 8 weiter. Diese kombinierte Auswahl- und Erzeugungsvorrichtung 8 wählt anhand dieses aktuellen Wertes einen Hilfsdatensatz 5, 6, 7, der den aktuellen Wert in den Zusatzinformationen aufweist, aus und erzeugt den Schlüssel K. Die Funktion der kombinierten Auswahl- und Erzeugungsvorrichtung 8 entspricht einer Kombination der Auswahleinrichtung 2 und der Erzeugungseinrichtung 3 der Fig. 1.

Im Folgenden wird dies näher unter Verwendung eines Temperatursensors als Ermittlungseinrichtung 4 beschrieben.

Ein Hilfsdatensatz 5, 6, 7 umfasst dann die eigentlichen Hilfsdaten bzw. Helper Data und einen Temperaturbereich oder einen Temperaturwert. Für den entsprechenden Temperaturbereich wird unter Verwendung der in demselben Hilfsdatensatz 5, 6, 7 enthaltenen Hilfsdaten ein sicherer Schlüssel K erzeugt, der keine oder zumindest wenig Bitfehler aufweist.

Bei überlappenden Temperaturbereichen kann der am besten passende Hilfsdatensatz 5, 6, 7 ausgewählt werden, d.h. derjenige, bei dem die aktuelle Temperatur am besten in der Mitte liegt. Bei fehlendem Hilfsdatensatz 5, 6, 7 kann ein Fehler ausgegeben werden, da keine Hilfsdaten zur Erzeugung eines Schlüssels K zur Verfügung stehen. Alternativ kann auch der am besten passende Hilfsdatensatz 5, 6, 7 ausgewählt werden, beispielsweise der Hilfsdatensatz 5, 6, 7, dessen Temperaturbereich die geringste Abweichung zur aktuellen Temperatur aufweist.

Falls der Schlüssel K bestimmt wurde, so kann bei einer Temperaturänderung in einen nicht abgedeckten Bereich ein neuer Hilfsdatensatz 5, 6, 7 angelegt werden. Es kann auch geprüft werden, ob ein bereits vorhandener Hilfsdatensatz 5, 6, 7 hinreichend gut geeignet ist, um den Schlüssel K zu bestimmen. Dann muss kein zusätzlicher Hilfsdatensatz 5, 6, 7 angelegt werden, sondern es kann der Temperaturbereich des vorhandenen Hilfsdatensatzes 5, 6, 7 erweitert werden, d.h. die Zusatzinformationen entsprechend angepasst werden.

Wenn kein expliziter Sensor 4 vorhanden ist, können mehrere Hilfsdatensätze 5, 6, 7 durchprobiert werden und jeweils ein Gütekriterium der Schlüsselextraktion bestimmt werden. Abhängig von den den Hilfsdatensätzen 5, 6, 7 zugeordneten Gütekriterien kann dann ein Hilfsdatensatz 5, 6, 7 ausgewählt werden.

Fig. 3 zeigt ein Ablaufdiagramm eines Verfahrens zum Erzeugen eines Schlüssels K unter Verwendung einer PUF 20.

In einem ersten Schritt 101 wird eine Mehrzahl von Hilfsdatensätzen 5, 6, 7 gespeichert, wobei ein jeder der Hilfsdatensätze 5, 6, 7 Hilfsdaten und Zusatzinformationen aufweist. Dieser Schritt 101 kann bereits bei der Fertigung erfolgen oder während des Betriebs erneut durchgeführt werden, wenn weitere Hilfsdatensätze 5, 6, 7 erforderlich werden.

In einem zweiten Schritt 102 wird ein Hilfsdatensatz 5, 6, 7 basierend auf den Zusatzinformationen ausgewählt.

Anschließend wird in einem dritten Schritt 103 der Schlüssel K basierend auf den Hilfsdaten des ausgewählten Hilfsdatensatzes 5, 6, 7 und unter Verwendung der PUF 20 erzeugt.

Obwohl die vorliegende Erfindung anhand von Ausführungsbeispielen beschrieben wurde, ist sie vielfältig modifizierbar.

## Patentansprüche

1. Schlüsselerzeugungsvorrichtung (10) zum Erzeugen eines Schlüssels (K) unter Verwendung einer Physical Unclonable Function (20), PUF, mit:
einer Speichereinrichtung (1) zur Speicherung einer Mehrzahl von Hilfsdatensätzen (5, 6, 7), wobei ein jeder der Hilfsdatensätze (5, 6, 7) Hilfsdaten und Zusatzinformationen aufweist,
einer Auswahleinrichtung (2) zur Auswahl eines Hilfsdatensatzes (5, 6, 7) basierend auf den Zusatzinformationen, und
einer Erzeugungseinrichtung (3) zur Erzeugung des Schlüssels (K) basierend auf den Hilfsdaten des ausgewählten Hilfsdatensatzes (5, 6, 7) und unter Verwendung der PUF (20).

2. Schlüsselerzeugungsvorrichtung (10) nach Anspruch 1,
**gekennzeichnet durch**
eine Ermittlungseinrichtung (4) zur Ermittlung von zumindest einem aktuellen Wert für zumindest eine Umgebungsbedingung der PUF (20), wobei die Speichereinrichtung (1) dazu eingerichtet ist, für jeden Hilfsdatensatz (5, 6, 7) zumindest einen Referenzwert für die zumindest eine Umgebungsbedingung als Zusatzinformationen zu speichern, und wobei die Auswahleinrichtung (2) dazu eingerichtet ist, den Hilfsdatensatz (5, 6, 7) basierend auf dem zumindest einen aktuellen Wert und dem zumindest einen Referenzwert auszuwählen.

3. Schlüsselerzeugungseinrichtung (10) nach Anspruch 2,
**dadurch gekennzeichnet,**
**dass** die Speichereinrichtung (1) dazu eingerichtet ist, für jeden Hilfsdatensatz (5, 6, 7) einen Referenzwertebereich für die zumindest eine Umgebungsbedingung als Zusatzinformation zu speichern.

4. Schlüsselerzeugungseinrichtung (10) nach Anspruch 3,
**dadurch gekennzeichnet,**
**dass** die Auswahleinrichtung (2) dazu eingerichtet ist, einen Hilfsdatensatz (5, 6, 7) auszuwählen, dessen Referenzwertebereich zu dem zumindest einen aktuellen Wert korrespondiert.

5. Schlüsselerzeugungseinrichtung (10) nach Anspruch 4,
**dadurch gekennzeichnet,**
**dass**, wenn sich die gespeicherten Referenzwertebereiche der Mehrzahl von Hilfsdatensätzen (5, 6, 7) überschneiden, die Auswahleinrichtung (2) dazu eingerichtet ist, denjenigen Hilfsdatensatz (5, 6, 7) auszuwählen, dessen Referenzwertebereich den zumindest einen aktuellen Wert als Mittelwert aufweist.

6. Schlüsselerzeugungseinrichtung (10) nach einem der Ansprüche 2 - 5,
**dadurch gekennzeichnet,**
**dass** die Auswahleinrichtung (2) dazu eingerichtet ist, ein Fehlersignal auszugeben, wenn keine der Zusatzinformationen den zumindest einen aktuellen Wert aufweist.

7. Schlüsselerzeugungseinrichtung (10) nach einem der Ansprüche 2 - 6,
**dadurch gekennzeichnet,**
**dass** die Ermittlungseinrichtung (4) einen Sensor zum Erfassen des zumindest einen aktuellen Werts für zumindest eine Umgebungsbedingung der PUF (20) aufweist.

8. Schlüsselerzeugungseinrichtung (10) nach einem der Ansprüche 2 - 7,
**dadurch gekennzeichnet,**
**dass** die zumindest eine Umgebungsbedingung eine Umgebungstemperatur, Luftfeuchtigkeit, Luftdruck, Vibration, Beschleunigung und/oder Versorgungsspannung der PUF (20) ist.

9. Schlüsselerzeugungseinrichtung (10) nach einem der Ansprüche 1 - 8,
**dadurch gekennzeichnet,**
**dass** die Erzeugungseinrichtung (3) dazu eingerichtet ist, einen neuen Hilfsdatensatz (5, 6, 7) für die Mehrzahl der Hilfsdatensätze (5, 6, 7) zu erzeugen und an die Speichereinrichtung (1) zur Speicherung zu übergeben.

10. Schlüsselerzeugungseinrichtung (10) nach einem der Ansprüche 1 - 9,
**dadurch gekennzeichnet,**
**dass** die Speichereinrichtung (1) dazu eingerichtet ist, für jeden Hilfsdatensatz (5, 6, 7) ein Gütekriterium als Zusatzinformation zu speichern, und dass die Auswahleinrichtung (2) dazu eingerichtet ist, den Hilfsdatensatz (5, 6, 7) basierend auf dem Gütekriterium auszuwählen.

11. Schlüsselerzeugungseinrichtung (10) nach Anspruch 10,
**dadurch gekennzeichnet,**
**dass** die Erzeugungseinrichtung (3) dazu eingerichtet ist, für einen jeden der Hilfsdatensätze (5, 6, 7) ein Gütekriterium zu ermitteln.

12. Schlüsselerzeugungseinrichtung (10) nach einem der Ansprüche 1 - 11,
**dadurch gekennzeichnet,**
**dass** die Speichereinrichtung (1) dazu eingerichtet ist, für den zuletzt ausgewählten Hilfsdatensatz (5, 6, 7) eine Referenzinformation zu speichern, und dass die Auswahleinrichtung (2) dazu eingerichtet ist, einen Hilfsdatensatz (5, 6, 7) basierend auf der Referenzinformation und den Zusatzinformationen auszuwählen.

13. Schlüsselerzeugungseinrichtung (10) nach einem der Ansprüche 1 - 12,
**dadurch gekennzeichnet,**
**dass** die Erzeugungseinrichtung (3) dazu eingerichtet ist, ein Challenge-Response-Verfahren mittels der PUF (20) durchzuführen.

14. Schlüsselerzeugungseinrichtung (10) nach einem der Ansprüche 1 - 13,
**dadurch gekennzeichnet,**
**dass** die Erzeugungseinrichtung (3) ein Fuzzy-Key-Extractor ist.

15. Verfahren zum Erzeugen eines Schlüssels (K) unter Verwendung einer Physical Unclonable Function (20), PUF, mit:
Speichern (101) einer Mehrzahl von Hilfsdatensätzen (5, 6, 7), wobei ein jeder der Hilfsdatensätze (5, 6, 7) Hilfsdaten und Zusatzinformationen aufweist,
Auswählen (102) eines Hilfsdatensatzes (5, 6, 7) basierend auf den Zusatzinformationen, und
Erzeugen (103) des Schlüssels (K) basierend auf den Hilfsdaten des ausgewählten Hilfsdatensatzes (5, 6, 7) und unter Verwendung der PUF (20).
